(19) Europäisches Patentamt
European Patent Office
Office européen des brevets

(11) **EP 4 389 818 B1**

(12) **EUROPÄISCHE PATENTSCHRIFT**

(45) Veröffentlichungstag und Bekanntmachung des Hinweises auf die Patenterteilung:
**16.10.2024 Patentblatt 2024/42**

(21) Anmeldenummer: **22216443.6**

(22) Anmeldetag: **23.12.2022**

(51) Internationale Patentklassifikation (IPC):
**C08L 23/12** *(2006.01)*

(52) Gemeinsame Patentklassifikation (CPC):
(C-Sets verfügbar)
**C08L 23/12**                                    (Forts.)

(54) **KUNSTSTOFFZUSAMMENSETZUNG, VERWENDUNG DER KUNSTSTOFFZUSAMMENSETZUNG UND VERFAHREN ZUR HERSTELLUNG EINES FORMKÖRPERS**

PLASTIC COMPOSITION, USE OF THE PLASTIC COMPOSITION AND METHOD FOR PRODUCING A MOLDED ARTICLE

COMPOSITION DE MATIÈRE PLASTIQUE, UTILISATION DE LA COMPOSITION DE MATIÈRE PLASTIQUE ET PROCÉDÉ DE FABRICATION D'UN CORPS MOULÉ

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(43) Veröffentlichungstag der Anmeldung:
**26.06.2024 Patentblatt 2024/26**

(73) Patentinhaber: **DIPROmat GmbH**
**91587 Adelshofen (DE)**

(72) Erfinder: **STENGLIN, Uwe**
**91587 Adelshofen (DE)**

(74) Vertreter: **Louis Pöhlau Lohrentz**
**Patentanwälte**
**Postfach 30 55**
**90014 Nürnberg (DE)**

(56) Entgegenhaltungen:
**EP-A1- 2 151 478        EP-A1- 2 955 203**
**WO-A1-2020/058313    US-B2- 8 933 174**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

(52) Gemeinsame Patentklassifikation (CPC): (Forts.)

C-Sets
**C08L 23/12, C08L 23/0815, C08L 53/02,**
**C08K 5/14;**
**C08L 23/12, C08L 53/02**

**Beschreibung**

Die Erfindung betrifft eine Kunststoffzusammensetzung, Verwendung der Kunststoffzusammensetzung und ein Verfahren zur Herstellung eines Formkörpers.

Polyolefine, wie beispielsweise Polypropylen (PP) oder Polyethylen (PE), gehören zu den am vielseitigsten verwendeten Kunststoffen in Kunststoffzusammensetzungen. Als Massenkunstoff werden Kunststoffzusammensetzungen aus Polyolefinen in einer Reihe von Formgebungsverfahren zu einer Vielzahl von Formkörper geformt.

Ein besonders relevantes Formgebungsverfahren ist das Spritzgießen. Beim Spritzgießen wird ein Formkörper aus einer Kunststoffzusammensetzung beispielsweise aus Polyolefin geformt, welche in eine Werkzeugkavität gespritzt wird. Die geschmolzene Kunststoffzusammensetzung wird für einen ausreichenden Zeitraum in der Werkzeugkavität gehalten, um zu erstarren und die Form der Werkzeugkavität abzuformen. Die Abkühlphase, d. h. die Zeit, die benötigt wird, um die Kunststoffzusammensetzung abzukühlen und den Formkörper zu entnehmen ist ein wichtiger Faktor für die Produktionszeit und damit für die Fertigungseffizienz. Die Eigenschaften der Kunststoffzusammensetzung, wie z. B. die Wärmeausdehnung und die Komprimierbarkeit, bestimmen das Ausmaß, in dem die geschmolzene Kunststoffzusammensetzung während der Abkühlphase Maßänderungen erfährt. Diese während der Abkühlphase auftretenden Dimensionsänderungen werden als Schwindung, insbesondere Verarbeitungsschwindung, bezeichnet.

Weitere relevante Formgebungsverfahren sind Extrusions- und Druckverfahren der additiven Fertigung. Bekannte Verfahren sind hierbei Granulatdruckverfahren, Pulverdruckverfahren und Filamentdruckverfahren. Diese Verfahren werden auch als 3D-Druckverfahren bezeichnet. Beim Pulverdruckverfahren wird ein Pulverbett aus Partikeln einer Kunststoffzusammensetzung, beispielsweise aus einem Polyolefin, bereitgestellt. Die Kunststoffzusammensetzung wird durch Einbringen von Energie selektiv geschmolzen, so dass sich in kontaktstehende Partikel miteinanderverbinden. Nach einer Abkühlphase wird eine weitere Pulverschicht auf das bestehende Pulverbett aufgebracht und ebenso selektiv geschmolzen. Diese Vorgehensweise wird wiederholt, bis ein fertiger Formkörper erhalten wird. Beim Filamentdruckverfahren oder Granulatdruckverfahren wird eine Kunststoffzusammensetzung in Form eines Filaments oder Granulats in einem Druckkopf geschmolzen und entlang einer spezifischen Kontur angeordnet, wo sie dann erstarrt. Der gewünschte Formkörper wird durch das Anordnen mehrerer Schichten der Kunststoffzusammensetzung übereinander erhalten.

Ein Nachteil von Kunststoffzusammensetzungen aus Polyolefinen besteht jedoch darin, dass sie bei den meisten Formgebungsverfahren nach dem Erstarren eine erhebliche Schwindung aufweisen. Von Polypropylen-Homopolymer ist bekannt, dass dieses eine Schwindung von bis zu 2 % aufweist. Das Problem der Schwindung wird noch dadurch verstärkt, dass Polyolefine einen vom Formgebungsverfahren abhängigen Schwindungsunterschied in Längs- und Querrichtung aufweisen.

Unter Längsrichtung wird die räumliche Erstreckung des Formkörpers, bevorzugt beginnend beim Angusspunkt, verstanden, die entlang einer eingebrachten Anisotropie von Polymerketten, insbesondere der amorphen Bereiche, und/oder von Fasern, entlang der Fließrichtung der geschmolzenen Kunststoffzusammensetzung verläuft. Mit anderen Worten sind Polymerketten und/oder Fasern in einem Formkörper in Längsrichtung zumindest teilweise orientiert. Die Querrichtung ist die räumliche Erstreckung des Formkörpers, die bevorzugt senkrecht zur Längsrichtung verläuft.

Durch den Schwindungsunterschied in Längs- und Querrichtung werden nicht nur Formkörper mit geringeren Abmaßen erhalten, sondern es werden Spannungen in den Formkörpern erzeugt, die zum Verzug des Formkörpers führen. Dies ist auf Verringerung der Anisotropie der Polymerketten und/oder Fasern zurückzuführen, wobei in Längsrichtung aufgrund der höheren Orientierung eine größere Schwindung stattfindet. Bei thermoplastischen Kunststoffzusammensetzungen mit Glasfaserverstärkung dreht sich diese Beobachtung um. In Richtung der Glasfaser ergibt sich eine geringere Schwindung und quer zur Glasfaser eine höhere Schwindung.

Dies bedeutet, dass bei Formgebungsverfahren, bei denen geringe Maßtoleranzen wichtig sind, die Form, beispielsweise die Werkzeugkavität, auf die spezifische Kunststoffzusammensetzung des Polyolefins und das spezifische Formgebungsverfahren angepasst werden muss, damit ein erhaltener Formkörper exakt die erforderlichen Abmessungen aufweist. Das Auftreten von Schwindung ist besonders problematisch, wenn speziell eine Form bereitgestellt wird, die auf eine bestimmte Kunststoffzusammensetzung und/oder ein bestimmtes Formgebungsverfahren angepasst ist, jedoch die Kunststoffzusammensetzung getauscht werden soll. Es ist zwar möglich, vorstehendes Problem durch die Erhöhung der Abkühlphase etwas zu kompensieren, dass geht jedoch zu Lasten der produzierten Stückzahl und somit zu Lasten der Wirtschaftlichkeit des Verfahrens.

In Anbetracht der vorstehend angeführten Problemstellung besteht folglich Bedarf an der Bereitstellung einer Kunststoffzusammensetzung, die eine geringe Schrumpfung auch bei kurzen Abkühlphasen aufweist. Weiter ist es wünschenswert, dass diese Kunststoffzusammensetzung verbesserte mechanische Eigenschaften wie eine hohe Schlagzähigkeit und Kerbschlagzähigkeit aufweist, sowie eine hohe Wärmeformbeständigkeit (engl. heat deflection temperature, HDT).

EP 3 212 713 B2 beschreibt, dass eine geringe Schwindung einer Kunststoffzusammensetzung von Polypropylen erreicht werden kann, wenn zu einem kristallinen isotaktischen Homopolymer ein überwiegend amorphes Propylen-Ethylen-Copolymer hinzugefügt wird. Hierdurch wird eine heterophasige Kunststoffzusammensetzung von Polypropylen erhalten, wobei gezeigt wird, dass die Maße der Proben in Längsrichtung mit einer Schwindung zwischen 0,96 % und 1,05 % eine geringere Schwindung aufweisen wie Proben der Vergleichsbeispiele. US 7,893,171 B2 wiederum beschreibt eine Reduzierung des Unterschieds der Schwindung in Längsrichtung zur Schwindung in Querrichtung durch die Zugabe eines Nukleationsmittels wie Talk. Durch eine gleichmäßigere Schwindung in jede Raumrichtung wird erreicht, dass der Verzug im Endprodukt verringert wird.

WO 2020/058313 A1 offenbart eine Mischung, mit der eine optimierte Kerbschlagzähigkeit und ein optimierter Volumenschwund erreicht werden sollen. D3 enthält keine 10-70 wt% Flachfasern und kein Verhältnis von "{Schwindung (Polyolefin) - Schwindung (Zusammensetzung)} / Schwindung (Polyolefin) ≥ 30%". D3 zeigt eine geringere Kerbschlagzähigkeit.

Aufgabe der Erfindung ist es, eine verbesserte Kunststoffzusammensetzung bereitzustellen, wobei die Kunststoffzusammensetzung zur Herstellung eines Formkörpers verwendet wird, der eine besonders geringe Schwindung aufweist. Weiter ist es Aufgabe der Erfindung, eine Verwendung für die verbesserte Kunststoffzusammensetzung bereitzustellen sowie ein Verfahren zur Herstellung eines verbesserten Formkörpers, wobei der verbesserte Formkörper die verbesserte Kunststoffzusammensetzung umfasst.

Die Aufgabe wird gelöst durch Bereitstellung einer Kunststoffzusammensetzung, insbesondere nach einem der Ansprüche 1 bis 12 wobei die Kunststoffzusammensetzung zumindest ein Polyolefin und zumindest ein thermoplastisches Elastomer enthält, wobei das zumindest eine thermoplastische Elastomer ein Copolymer ist, das zumindest einen Block A auf Dienbasis und zumindest einen Block B auf alpha-Methylstyrolbasis aufweist, wobei das Verhältnis der Differenz zwischen der Schwindung des Polyolefins und der Schwindung der Kunststoffzusammensetzung zur Schwindung des Polyolefins mindestens einen Wert von 30 %, beträgt, wobei die Schwindungen gemäß DIN ISO 294-4 ("Kunststoffe - Spritzgießen von Probekörpern aus Thermoplasten - Teil 4: Bestimmung der Verarbeitungsschwindung (ISO 294-4:2018); Deutsche Fassung EN ISO 294-4:2019", Ausgabedatum: 2019-04) bestimmt sind. , wobei die Kunststoffzusammensetzung Verstärkungsfasern in einer Menge von 10 Gew.-% bis 70 Gew.-%, jeweils bezogen auf das Gesamtgewicht der Kunststoffzusammensetzung, enthält, wobei die Verstärkungsfasern als Flachfasern ausgestaltete Glasfasern umfassen.

Weiter wird die Aufgabe gelöst durch Bereitstellung einer Verwendung der Kunststoffzusammensetzung nach einem der Ansprüche 1 bis 10 beim Spritzgießen, Extrudieren oder beim additiven Fertigen.

Weiter wird die Aufgabe gelöst durch Bereitstellen eines Verfahrens nach Anspruch 14 zur Herstellung eines Formkörpers, wobei das Verfahren zumindest die folgenden Schritte umfasst:

- Bereitstellen einer Kunststoffzusammensetzung nach einem der Ansprüche 1 bis 9
- Formen der bereitgestellten Kunststoffzusammensetzung zu einem Formkörper.

Unter Schwindung wird bevorzugt jeweils die Schwindung in Längsrichtung und/oder die Schwindung in Querrichtung verstanden. Weiter wird unter Schwindung bevorzugt die Verarbeitungsschwindung verstanden. Die Verarbeitungsschwindung ist das Verhältnis der Differenz zwischen den Werkzeugmaßen und den Formkörpermaßen nach 16 h Lagerung im Normklima (Temperatur: 23 °C, relative Luftfeuchte: 50 %) zu den Werkzeugmaßen in Prozent, verstanden. Die Formkörpermaße direkt nach dem Formgebungsverfahren können die Formkörpermaße im flüssigen Zustand sein und können durch die Werkzeugmaße bestimmt sein.

Das Verhältnis der Differenz zwischen der Schwindung des Polyolefins und der Schwindung der Kunststoffzusammensetzung zur Schwindung des Polyolefins kann mit anderen Worten mit der folgenden Gleichung (1) berechnet werden:

$$\Delta\% = \frac{PO - K}{PO} \qquad\qquad (1)$$

Hierbei steht PO für die Schwindung der Polyolefins und K für die Schwindung der Kunststoffzusammensetzung, jeweils angegeben in Prozent. Erhalten wird die prozentuelle Differenz Δ% der Schwindung in Prozent. Sie steht für den Grad um den die Schwindung der Kunststoffzusammensetzung im Vergleich zu dem Polyolefin verbessert ist.

Weist beispielsweise ein Polyolefin eine Schwindung von 2 % und eine entsprechende erfindungsgemäße Kunststoffzusammensetzung eine Schwindung von 1,4 % auf, so ergibt sich eine prozentuelle Differenz von 30 %. Weist jedoch die Kunststoffzusammensetzung eine Schwindung von 0,1 % ausgehend von vorstehenden Polyolefins mit der Schwindung von 2 % auf, so ergibt sich eine prozentuelle Differenz von 95 %.

Es ist erfindungsgemäß auch möglich, einen Formkörper umfassend die Kunststoffzusammensetzung nach Anspruch 1, eine Verwendung des Formkörpers, ein Verfahren zur Herstellung der Kunststoffzusammensetzung nach Anspruch 1 bereitzustellen.

Durch die vorliegende Erfindung wird es ermöglicht, eine Kunststoffzusammensetzung bereitzustellen, wobei die Kunststoffzusammensetzung zur Herstellung von Formkörpern verwendet werden kann. Diese Formkörper weisen eine hohe Maßhaltigkeit durch die sehr geringe Schwindung, sowohl in Längsrichtung als auch in Querrichtung, auf. Dies gilt für Kunststoffzusammensetzungen ohne wie auch mit Verstärkungsfasern. Insbesondere für Kunststoffzusammensetzungen mit Verstärkungsfasern kann die Schwindung quer zur Faser auf ein Minimum reduziert werden. Mit anderen Worten ermöglicht die Kunststoffzusammensetzung die Herstellung von Formkörpern mit geringem Verzug.

Dies bietet den Vorteil, dass bei Formgebungsverfahren Zykluszeiten durch eine Reduktion der Abkühlzeit verkürzt werden kann, wodurch die Anzahl der erhaltenen Formkörper pro Zeiteinheit erhöht wird. Somit lassen sich Formgebungsverfahren wirtschaftlich effizienter gestalten. Zusätzlich ist die Verfahrensdauer, sollte nur eine spezifische Anzahl an Formkörpern hergestellt werden, signifikant verkürzt. Somit sind energieintensive Prozesse, bspw. das Halten der Kunststoffzusammensetzung im geschmolzenen Zustand, nur über einen kürzeren Zeitraum notwendig, was auch die Kosten des Verfahrens reduziert.

Weiter weisen die aus der Kunststoffzusammensetzung erhaltenen Formkörper, neben der geringen Schwindung, verbesserte mechanische Eigenschaften auf. Durch die Zugabe des thermoplastischen Elastomers, wie in Anspruch 1 spezifiziert, weisen die Formkörper, insbesondere für in Masse hergestellte Formkörper, sehr hohe Schlagzähigkeiten und sehr hohe Kerbschlagzähigkeiten auf. Somit können robuste Formkörper für anspruchsvolle Anwendungen erhalten werden, wobei die Anwendungsmöglichkeiten von in hoher Stückzahl erhaltener Formkörper erhöht werden.

Weiter ist es möglich, die Kunststoffzusammensetzung durch die verbesserten Eigenschaften in einer Vielzahl von Verfahren einzusetzen. Bei 3D-Druckverfahren wie Extrusion-Ablage-Verfahren mit Granulat, Pulver oder Filament wird das geschmolzene Polymer auf einer ebenen Platte aus Epoxidharz, Glas oder Metall abgelegt. Weist eine Kunststoffzusammensetzung einen großen Verzug, eine niedrige Wärmeformbeständigkeit oder keine ausreichende Zähigkeit auf, so löst sich diese beim von der Bauplatte und ein Druck wird unmöglich. Die erfindungsgemäße Kunststoffzusammensetzung weist jedoch die nötige Kombination aus hoher Wärmeformbeständigkeit, hoher Zähigkeit und geringer Schwindung auf, um eine gute Bauplattenhaftung und verzugsfreie Teile zu ermöglichen.

Teilkristalline Thermoplaste bieten gegenüber amorphen Thermoplasten den Vorteil, dass sie durch die Ausbildung von regelmäßen Strukturen fester, härter sowie zäher sind. Weiter verfügen sie über eine höhere Wärmeformbeständigkeit und eine bessere Resistenz gegenüber Chemikalien. Sie weisen somit vorteilhafte Beständigkeiten gegenüber mechanischen und chemischen Belastungen auf. Amorphe Thermoplaste sind im Gegensatz jedoch einfacher zu verarbeiten und weisen aufgrund der fehlenden Kristallisation ein geringere Schwindung auf. Durch die beschriebene Kunststoffzusammensetzung ist es nun möglich, die vorstehenden vorteilhaften Eigenschaften von teilkristallinen Thermoplasten mit denen von amorphen Thermoplasten zu kombinieren.

Weitere vorteilhafte Ausgestaltungen der Erfindung sind in den Unteransprüchen angegeben.

Das Polyolefin ist bevorzugt ein teilkristalliner Thermoplast. Das Polyolefin kann linear oder verzweigt vorliegen.

Weiter kann das Polyolefin ein Homopolymer oder ein Copolymer sein. Insbesondere kann das Polyolefin ein Copolymer, das aus der Gruppe, die aus statistischem Copolymer, Gradientcopolymer, alternierendem Copolymer, Blockcopolymer, Propfcopolymer oder deren Mischformen besteht, ausgewählt ist.

Bei einer bevorzugten Ausführungsform ist das Polyolefin aus der Gruppe, die aus Polypropylen (PP), insbesondere Polypropylen-Homopolymer (PPH), Polypropylen-Copolymer (PPC), oder Polypropylen-Random-Copolymer (PPR), Polyethylen (PE), insbesondere High-Density-Polyethylen (HDPE), Low-Density-Polyethylen (LDPE), Linear-Low-Density-Polyethylen (LLDPE), Very-Low-Density-Polyethylen (VLDPE), oder Medium-Density-Polyethylen (MDPE), Ethylen-Vinylacetat-Copolymer (EVA), Ethylen-Ethylacrylat-Copolymer (EEA), Ethylen-Butylacrylat-Copolymer (EBA) und deren Copolymeren und Mischungen davon besteht, ausgewählt.

Weiter bevorzugt ist das Polyolefin aus der Gruppe, die aus PP, insbesondere PPH, PPC, oder PPR, PE, insbesondere HDPE, LDPE, LLDPE, VLDPE, oder MDPE, und deren Copolymeren und Mischungen davon besteht, ausgewählt.

Weiter bevorzugt ist Polyolefin aus der Gruppe, die PPH, PPC oder PPR, und deren Copolymeren und Mischungen davon besteht, ausgewählt. Noch weiter bevorzugt ist das Polyolefin ein PPH.

Bei einer bevorzugten Ausführungsform enthält die Kunststoffzusammensetzung das Polyolefin in einer Menge ausgewählt aus dem Bereich von 25 Gew.-% bis 99 Gew.-%, bevorzugt von 35 Gew.-% bis 96 Gew.-%, von 40 Gew.-% bis 75 Gew.-%, jeweils bezogen auf das Gesamtgewicht der Kunststoffzusammensetzung.

Bei einer bevorzugten Ausführungsform weist das Polyolefin einen Wert für die Glasübergangstemperatur ausgewählt aus dem Bereich von -100 °C bis 100 °C, bevorzugt von -80 °C bis 50 °C, noch weiter bevorzugt von -70 °C bis 30 °C, auf.

Die Glasübergangstemperatur wird durch aus dem Stand der Technik bekannte Methoden mittels der Verwendung einer dynamisch-mechanischen Analyse bei einer Frequenz von 11 Hz im Zugmodus in Abhängigkeit der Temperatur bestimmt.

Gemäß einer bevorzugten Ausführungsform wird die Glasübergangstemperatur mittels dynamisch mechanischer Analyse gemäß der in der ISO 6721-11:2019-06 ("Kunststoffe - Bestimmung dynamisch-mechanischer Eigenschaften - Teil 11: Glasübergangstemperatur", Ausgabedatum: 2019-06) beschriebenen Methode bestimmt.

Bei einer bevorzugten Ausführungsform enthält die Kunststoffzusammensetzung das thermoplastische Elastomer in einer Menge von bis zu 75 Gew.-%, bevorzugt von bis zu 70 Gew.-%, weiter bevorzugt von bis zu 60 Gew.-%, noch weiter bevorzugt von bis zu 50 Gew.-%, jeweils bezogen auf das Gesamtgewicht der Kunststoffzusammensetzung.

Die Erfinder haben festgestellt, dass oberhalb der angebenden Menge an thermoplastischen Elastomers die Beständigkeit gegenüber Ölen und Fetten der Kunststoffzusammensetzung abnehmen kann.

Weiter enthält die Kunststoffzusammensetzung bevorzugt das thermoplastische Elastomer in einer Menge von mindestens 1 Gew.-%, bevorzugt von mindestens 4 Gew.-%, weiter bevorzugt von mindestens 10 Gew.-%, jeweils bezogen auf das Gesamtgewicht der Kunststoffzusammensetzung.

Bereits durch die vorstehende minimale Menge an thermoplastischen Elastomer wird gewährleistet, dass die durch das thermoplastische Elastomer erhaltenen vorteilhaften Eigenschaften einer verringerten Schwindung und eine verbesserte Schlagzähigkeit, sowie Kerbschlagzähigkeit der Kunststoffzusammensetzung ermöglicht werden.

Das thermoplastische Elastomer ist bevorzugt ein Blockcopolymer insbesondere mit der Blocksequenz, die aus der Gruppe, die aus A-B, A-B-A oder B-A-B besteht, ausgewählt ist, oder ein Propfcopolymer ist. Bevorzugt ist bei dem Propfcopolymer der zumindest eine Block A auf den zumindest einen Block B aufgepfropft oder der zumindest eine Block B ist auf den zumindest einen Block A aufgepfropft. Gemäß einer erfindungsgemäßen Variation ist das das thermoplastische Elastomer eine Mischform von den vorstehenden Copolymeren.

Bei einer bevorzugten Ausführungsform ist der zumindest eine Block A auf Basis der Gruppe, die aus Butadien, Isopren und Kombinationen davon besteht, ausgewählt. Bei einer besonders bevorzugten Ausführungsform ist der zumindest eine Block A auf Basis von 1,3-Butadien.

Der zumindest eine Block A ist bevorzugt zumindest teilweise hydriert. Weiter bevorzugt ist der zumindest eine Block A zumindest zu 80 %, weiter bevorzugt zumindest zu 95 %, noch weiter bevorzugt zu 100 % hydriert.

Bevorzugt weist der zumindest eine Block A des thermoplastischen Elastomers eine Glasübergangstemperatur von höchstens 100 °C, bevorzugt von höchstens 50 °C, weiter bevorzugt von höchstens 30 °C, auf. Alternativ oder zusätzlich ist es möglich, dass die Glasübergangstemperatur des zumindest einen Blocks A des thermoplastischen Elastomers einen Wert aufweist, der ausgewählt ist aus einem Bereich von -100 °C bis 100 °C, bevorzugt von -80 °C bis 50 °C, noch weiter bevorzugt von -70 °C bis 30 °C. Die Glasübergangstemperatur wird wie oben beschrieben mittels der Verwendung einer dynamisch-mechanischen Analyse bestimmt.

Bei einer bevorzugten Ausführungsform liegt der Anteil des zumindest einen Blocks B in dem thermoplastischen Elastomer ausgewählt aus einem Bereich von 15 Gew.-% bis 45 Gew.-%, bevorzugt von 20 Gew.-% bis 40 Gew.-%, weiter bevorzugt von 30 Gew.-% bis 32 Gew.-%, jeweils bezogen auf das Gesamtgewicht des thermoplastischen Elastomers. Bei einer besonders bevorzugten Ausführungsform liegt der der Anteil des zumindest einen Blocks B in dem thermoplastischen Elastomer bei 31 Gew.-% bezogen auf das Gesamtgewicht des thermoplastischen Elastomers.

Bei einer bevorzugten Ausführungsform weist der zumindest eine Block B des thermoplastischen Elastomer eine Glasübergangstemperatur aus einem Bereich von 120 °C bis 230 °C, bevorzugt von 140 °C bis 215 °C, weiter bevorzugt von 160 °C bis 170 °C, auf. Die Glasübergangstemperatur wird wie weiter oben beschrieben mittels der Verwendung einer dynamisch-mechanischen Analyse bestimmt.

Insbesondere durch die hohe Glasübergangstemperatur des zumindest einen Block B setzt nach dem Formgebungsverfahren beim Abkühlen einer geschmolzenen erfindungsgemäßen Kunststoffzusammensetzung sehr schnell, bevorzugt sofort, ein Kristallisationsprozess ein und die Kunststoffzusammensetzung erstarrt, wodurch eine sehr geringe Schwindung ermöglicht wird.

Bei einer bevorzugten Ausführungsform des thermoplastischen Elastomers ist das thermoplastische Elastomer ein Blockcopolymer, wobei der Block A auf 1,3-Butadien basiert, wobei der Block A zumindest eine Block A zumindest zu 80 %, weiter bevorzugt zumindest zu 95 %, noch weiter bevorzugt zu 100 % hydriert ist und wobei der zumindest eine Block B ausgewählt ist aus einem Bereich von 15 Gew.-% bis 45 Gew.-%, bevorzugt von 20 Gew.-% bis 40 Gew.-%, weiter bevorzugt von 30 Gew.-% bis 32 Gew.-%, noch weiter bevorzugt von 31 Gew.-%, jeweils bezogen auf das Gesamtgewicht des thermoplastischen Elastomers, und wobei das thermoplastische Elastomer eine Glasübergangstemperatur aus einem Bereich von 120 °C bis 230 °C, bevorzugt von 140 °C bis 215 °C, weiter bevorzugt von 160 °C bis 170 °C, aufweist.

Gemäß einer bevorzugten Ausführungsform weist das thermoplastische Elastomer einen Wert für einen Schmelzflussindex bei 230 °C und einer Auflagelast von 2,16 kg ausgewählt aus einem Bereich von 3 g/10 min bis 7 g/10 min, bevorzugt von 5 g/10 min bis 6 g/10 min, auf, insbesondere nach der in DIN EN ISO 1133-1:2012-03 ("Kunststoffe - Bestimmung der Schmelze-Massefließrate (MFR) und der Schmelze-Volumenfließrate (MVR) von Thermoplasten - Teil 1: Allgemeines Prüfverfahren (ISO 1133-1:2011); Deutsche Fassung EN ISO 1133-1:2011", Ausgabedatum: 2012-03) beschriebenen Methode.

Vorteilhaft an dem obigen Bereich des Schmelzflussindizes des thermoplastischen Elastomers ist, dass er der Größenordnung des für die erfindungsgemäße Kunststoffzusammensetzung relevanten Schmelzflussindex entspricht. Somit wird durch die Zugabe des thermoplastischen Elastomers die Verarbeitbarkeit der Kunststoffzusammensetzung im geschmolzenen Zustand nicht negativ beeinflusst.

Bei einer bevorzugten Ausführungsform weist das Verhältnis der Differenz zwischen der Schwindung des Polyolefins in Längsrichtung und der Schwindung der Kunststoffzusammensetzung in Längsrichtung zur Schwindung des Polyolefins in Längsrichtung mindestens einen Wert von 30 %, mindestens von 40 %, mindestens von 50 %, auf, wobei die Schwindungen jeweils gemäß DIN ISO 294-4 bestimmt sind.

Weiter bevorzugt weist das Verhältnis der Differenz zwischen der Schwindung des Polyolefins in Längsrichtung und der Schwindung der Kunststoffzusammensetzung in Längsrichtung zur Schwindung des Polyolefins in Längsrichtung einen Wert ausgewählt aus einem Bereich von 30 % bis 100 %, weiter bevorzugt von 35 % bis 98 %, noch weiter bevorzugt von 40 % bis 90 %, ferner noch weiter bevorzugt von 50 % bis 80 %, auf, wobei die Schwindungen jeweils gemäß DIN ISO 294-4 bestimmt sind.

Die in zwei vorstehen denen Absätzen aufgeführten prozentuellen Werte entsprechen der prozentuellen Differenz in Längsrichtung $\Delta\%_L$ und kann durch die folgende Gleichung (2) bestimmt werden:

$$\Delta\%_L = \frac{PO_L - K_L}{PO_L} \qquad (2)$$

$PO_L$ entspricht dem Wert der Schwindung des Polyolefins in Längsrichtung und $K_L$ dem Wert der Schwindung der Kunststoffzusammensetzung in Längsrichtung, jeweils angegeben in Prozent.

In einer weiteren bevorzugten Ausführungsform weist das Verhältnis der Differenz zwischen der Schwindung des Polyolefins in Querrichtung und der Schwindung der Kunststoffzusammensetzung zur Schwindung des Polyolefins in Querrichtung mindestens einen Wert von 30 %, mindestens von 40 %, mindestens von 50 %, auf, wobei die Schwindungen jeweils gemäß DIN ISO 294-4 bestimmt sind.

Weiter bevorzugt weist das Verhältnis der Differenz zwischen der Schwindung des Polyolefins in Querrichtung und der Schwindung der Kunststoffzusammensetzung in Längsrichtung zur Schwindung des Polyolefins in Querrichtung einen Wert ausgewählt aus einem Bereich von 30 % bis 100 %, weiter bevorzugt von 35 % bis 98 %, noch weiter bevorzugt von 40 % bis 90 %, ferner noch weiter bevorzugt von 50 % bis 80 %, auf, wobei die Schwindungen jeweils gemäß DIN ISO 294-4 bestimmt sind.

Die in zwei vorstehen denen Absätzen aufgeführten prozentuellen Werte entsprechen der prozentuellen Differenz in Querrichtung $\Delta\%_Q$ und kann durch die folgende Gleichung (2) bestimmt werden:

$$\Delta\%_Q = \frac{PO_Q - K_Q}{PO_Q} \qquad (3)$$

$PO_Q$ entspricht dem Wert der Schwindung des Polyolefins in Längsrichtung und $K_Q$ dem Wert der Schwindung der Kunststoffzusammensetzung in Längsrichtung, jeweils angegeben in Prozent.

Typischerweise weisen ungefüllte teilkristalline Thermoplasten Werte für die Schwindungen in Längsrichtung und/oder Querrichtung gemäß DIN EN ISO 294-4 zwischen 1 % bis 2,5 %, bevorzugt zwischen 1 % bis 2% auf, wobei die Schwindungen in Längsrichtung stärker ausgeprägt sind.

In einer weiteren bevorzugten Ausführungsform weist die Kunststoffzusammensetzung einen Wert für die Schwindung in Längsrichtung gemäß der in DIN EN ISO 294-4 beschriebenen Methode ausgewählt aus einem Bereich von 0 % bis 0,7 %, bevorzugt von 0,1 % bis 0,5 % bevorzugt von 0,2 % bis 0,3 %, auf. Zusätzlich oder alternativ weist die Kunststoffzusammensetzung einen Wert für die Schwindung in Querrichtung gemäß der in DIN EN ISO 294-4 beschriebenen Methode ausgewählt aus einem Bereich von 0 % bis 0,7 %, bevorzugt von 0,1 % bis 0,5 % bevorzugt von 0,2 % bis 0,3 %, auf.

Durch die geringe Schwindung, insbesondere die geringe Schwindung in Längsrichtung und Querrichtung, ist es möglich, sehr verzugsarme Formkörper bereitzustellen.

So ist es möglich, dass die Kunststoffzusammensetzung in Form eines plattenförmigen Spritzgussformkörpers mit den Maßen von Breite: 150 mm, Länge: 100 mm und Höhe: 2 mm einen Wert für einen Verzug, ausgewählt aus einem Bereich von 0 mm bis 10 mm, bevorzugt von 0,01 mm bis 7 mm, weiter bevorzugt von 0,1 mm bis 3,5 mm, aufweist.

Zur Bestimmung des Verzugs wird der plattenförmige Spritzgussformkörper auf eine plane Unterlage gelegt, wobei nacheinander jeweils eine Ecke des Spritzgussformkörpers auf die Unterlage gedrückt wird, so dass diese Ecke in Kontakt mit der Unterlage gebracht wird. Gemessen wird der maximal mögliche Abstand der jeweiligen diagonal gegenüberliegenden Ecke des plattenförmigen Spritzgussformkörpers senkrecht zu der von der Unterlage aufgespannten Ebene.

Der geringe Verzug der Kunststoffzusammensetzung ermöglicht es Formkörper mit einer hohen Maßhaltigkeit bereitzustellen. In Kombination mit der guten chemischen Resistenz teilkristalliner Thermoplasten ist es beispielsweise möglich passgenaue Rohre und Leitungen für feste, flüssige, und/oder gasförmige Medien bereitzustellen, ohne das Risiko, dass diese einerseits durch die Medien korrodieren oder andererseits, dass die Medien an den Verbindungstellen austreten.

Bei einer weiteren bevorzugten Ausführungsform weist die Kunststoffzusammensetzung einen Wert für die Kerbschlagzähigkeit nach Charpy gemäß der in DIN EN ISO 179-1:2010-11 ("Kunststoffe - Bestimmung der Charpy-Schlageigenschaften - Teil 1: Nicht instrumentierte Schlagzähigkeitsprüfung (ISO 179-1:2010); Deutsche Fassung EN ISO 179-1:2010", Ausgabedatum: 2010-11) beschriebenen Methode von mindestens 16 kJ/m$^2$, bevorzugt ausgewählt aus dem Bereich von 16 kJ/m$^2$ bis 100 kJ/m$^2$, weiter bevorzugt von 25 kJ/m$^2$ bis 80 kJ/m$^2$, noch weiter bevorzugt von 30 kJ/m$^2$ bis 65 kJ/m$^2$, auf.

Bei einer weiteren bevorzugten Ausführungsform weist die Kunststoffzusammensetzung einen Wert für Schlagzähigkeit nach Charpy gemäß der in DIN EN ISO 179-1:2010-11 beschriebenen Methode von mindestens 16 kJ/m$^2$, bevorzugt ausgewählt aus dem Bereich von 16 kJ/m$^2$ bis 100 kJ/m$^2$, weiter bevorzugt von 30 kJ/m$^2$ bis 85 kJ/m$^2$, noch weiter bevorzugt von 40 kJ/m$^2$ bis 65 kJ/m$^2$, auf.

Bei einer weiteren bevorzugten Ausführungsform weist die Kunststoffzusammensetzung einen Wert für Kerbschlagzähigkeit nach Izod gemäß der in DIN EN ISO 180:2020-03 ("Kunststoffe - Bestimmung der Izod-Schlagzähigkeit (ISO 180:2019); Deutsche Fassung EN ISO 180:2019", Ausgabedatum: 2020-03) beschriebenen Methode von mindestens 16 kJ/m$^2$, bevorzugt ausgewählt aus dem Bereich von 16 kJ/m$^2$ bis 100 kJ/m$^2$, weiter bevorzugt von 30 kJ/m$^2$ bis 85 kJ/m$^2$, noch weiter bevorzugt von 40 kJ/m$^2$ bis 65 kJ/m$^2$, auf.

Die vorstehenden Bereiche Kerbschlagzähigkeiten und Schlagzähigkeiten gewährleisten, dass die erfindungsgemäße Kunststoffzusammensetzung herausragende Belastbarkeiten gegenüber mechanischer Beanspruchung aufweist. Diese Belastbarkeiten werden durch den Zusatz des thermoplastischen Elastomers erreicht.

Probenkörper, die auch nach der Schlagprüfung nicht in zwei Teile zerbrechen, sich verbiegen und/oder trotz Kerbe nach dem Schlag elastisch zurückfedern, erhalten insbesondere als Wert die Bezeichnung "NB" (engl. non-broken). In einer bevorzugten Ausführungsform werden Probenkörper, die während der Bestimmung der Kerbschlagzähigkeiten und Schlagzähigkeiten bei einer Belastung von weniger als 80 kJ/m$^2$ nicht brechen mit der Bezeichnung "NB" bezeichnet.

Bei einer weiteren bevorzugten Ausführungsform weist die Kunststoffzusammensetzung einen Wert für die Wärmeformbeständigkeit (engl. heat deflection temperature, HDT) nach der Methode B gemäß der DIN EN ISO 75-1:2020-06 ("Kunststoffe - Bestimmung der Wärmeformbeständigkeitstemperatur-Teil 1: Allgemeines Prüfverfahren (ISO 75-1:2020); Deutsche Fassung EN ISO 75-1:2020", Ausgabedatum: 2020-06) und der DIN EN ISO 75-2:2013-08 ("Kunststoffe - Bestimmung der Wärmeformbeständigkeitstemperatur-Teil 2: Kunststoffe und Hartgummi (ISO 75-2:2013); Deutsche Fassung EN ISO 75-2:2013", Ausgabedatum: 2013-08) von mindestens 60 °C, bevorzugt ausgewählt aus dem Bereich von 60 °C bis 200 °C, weiter bevorzugt von 80 °C bis 180 °C, noch weiter bevorzugt von 130 °C bis 165 °C, auf. Die Wärmeformbeständigkeit bestimmt nach der Methode B wird im Folgenden als HDT-B abgekürzt.

Bei Methode B wird durch Gewichtstücke und/oder Federn eine Kraft pro Fläche von 0,45 N/mm$^2$ auf den Probenkörper aufgebracht.

Vorteilhaft ist, dass die Kunststoffzusammensetzung auch mit einem Anteil von beispielsweise 15 Gew.-% bis 20 Gew.-% thermoplastischen Elastomers eine hohe Wärmeformbeständigkeit, insbesondere neben der hohen Zähigkeit, aufweist. Dies ist überraschend, da bei einer Zugabe eines konventionellen Elastomers mit einer Reduzierung der Wärmeformbeständigkeit zu rechnen ist. Die hohe Wärmeformbeständigkeit, insbesondere in Kombination mit dem geringen Verzug, erzielt den vorteilhaften Effekt, dass die Kunststoffzusammensetzung beispielsweise für 3D-Druckverfahren sehr gut geeignet ist, da es zu keiner Ablösung von einer Bauplatte während des Verfahrens kommt.

Die Kunststoffzusammensetzung weist Verstärkungsfasern auf. : 10 Gew.-% bis 70 Gew.-%, jeweils bezogen auf das Gesamtgewicht der Kunststoffzusammensetzung, wobei die Verstärkungsfasern als Flachfasern ausgestaltete Glasfasern umfassen.

Insbesondere enthält die Kunststoffzusammensetzung Verstärkungsfasern in einer Menge von 10 bis 70 Gew.-%, bevorzugt von bis zu 50 Gew.-%, weiter bevorzugt von bis zu 40 Gew.-%, bezogen auf das Gesamtgewicht der Kunststoffzusammensetzung. Weiter kann die Kunststoffzusammensetzung Verstärkungsfasern ausgewählt aus dem Bereich von 10 Gew.-% bis 70 Gew.-%, bevorzugt von 10 Gew.-% bis 50 Gew.-%, weiter bevorzugt von 15 Gew.-% bis 40 Gew.-%, jeweils bezogen auf das Gesamtgewicht der Kunststoffzusammensetzung enthalten.

Durch den vorstehend beschriebene Menge Verstärkungsfasern kann gewährleistet werden, dass die Schwindung der Kunststoffzusammensetzung durch die Glasfasern reduziert wird, ohne dass sich die Verarbeitbarkeit der Kunststoffzusammensetzung wesentlich verschlechtert.

Die Flachfasern weisen bevorzugt einen Formfaktor von Dicke zu Breite ausgewählt aus einen Bereich von 1:1,5 bis 1:5, bevorzugt von 1:2 bis 1:4, weiter bevorzugt von 1:2,5 bis 1:3,5, auf.

Die Verwendung von Glasfasern bietet den Vorteil, dass die Schwindung kostengünstig weiter reduziert werden kann. Insbesondere die Verwendung von Flachfasern bietet den Vorteil, dass hierdurch nicht nur die Schwindung im insgesamt reduziert wird, sondern dass auch durch den oben beschriebenen Formfaktor die Orientierung der Fasern reduziert wird. Die Flachfasern weisen somit vorzugsweise eine statistische Verteilung bei der Orientierung auf. Dies verringert zusätzlich den Unterschied zwischen den Schwindungen in Längsrichtung und Querrichtung.

Bei einer bevorzugten Ausführungsform weist die Kunststoffzusammensetzung keine mineralischen Füllstoffe auf, wobei Glas kein mineralischer Füllstoff im Sinne der Erfindung ist.

Unter Füllstoffen werden Materialien verstanden, die einen Gewichtsanteil von über 5 Gew.-% bezogen auf das Gesamtgewicht der Kunststoffzusammensetzung aufweisen und ungelöst in der Kunststoffzusammensetzung vorliegen.

Unter mineralischen Füllstoffen werden beispielsweise Silikate, Sulfate, Carbonate oder Mischungen davon verstanden. Bevorzugt weist die Kunststoffzusammensetzung kein Schichtsilikat wie beispielsweise Talkum, keine Kreide, kein Gesteinsmehl oder Mischungen davon auf.

Bei einer bevorzugten Ausführungsform weist die Kunststoffzusammensetzung keinen Füllstoff, insbesondere mineralischen Füllstoff, mit einem Formfaktor von Dicke zu Breite von weniger als 1:1,5, bevorzugt weniger als 1:1,3, auf.

Mineralische Füllstoffe sind geläufige Mittel, um die Schwindung von Kunststoffzusammensetzungen zu minimieren, da sie die Unterschiede zwischen Schwindung in Längsrichtung und in Querrichtung reduzieren. Jedoch reduzieren mineralische Füllstoffe die Gesamtschwindung in einem geringeren Umfang Im Vergleich zu beispielsweise Verstärkungsfasern. Daher müssen mineralische Füllstoffe, um einen Effekt zu erzielen bezogen auf das Gesamtgewicht der Kunststoffzusammensetzung in großen Anteilen eingesetzt werden, wobei für gewöhnlich die Schwindung auch bei hohen Anteilen von mineralischen Füllstoffen unter 0,7 % bis 1,5 % in Längsrichtung und/oder Querrichtung nicht reduziert werden kann. Die geringfügige Verbesserung der Schwindung führt jedoch zu einer Reihe von negativen Eigenschaften. So weisen mineralische Füllstoffe für gewöhnlich eine höhere Dichte im Vergleich zu Polymeren auf, so dass die Endprodukte ein höheres Gewicht aufweisen. Weiter weisen sie eine schlechte Zähigkeit und Kerbschlagzähigkeit auf und reduzieren die Kratzbeständigkeit der Kunststoffzusammensetzung.

Es ist auch möglich, dass die Kunststoffzusammensetzung zumindest ein Additiv umfasst, das einzeln oder in Kombination aus der Gruppe, die aus Stabilisator, Lichtschutzmittel, Flammschutzmittel, Hydrophobierungsmittel, Weichmacher, Antioxidans, Farbmittel, Pigment, Antistatika, Silikonöle, Entformungsmittel oder Trennmittel besteht, ausgewählt ist.

Unter Additiven werden Materialien verstanden, die einen Gewichtsanteil von unter 5 Gew.-% bezogen auf das Gesamtgewicht der Kunststoffzusammensetzung aufweisen. Additive können in der Kunststoffzusammensetzung gelöst oder ungelöst vorliegen.

Bevorzugt weist die Kunststoffzusammensetzung das zumindest eine Additiv mit einem Anteil bezogen auf das Gesamtgewicht der Kunststoffzusammensetzung ausgewählt aus dem Bereich von bis zu 5 Gew-%, bevorzugt von bis zu 3 Gew.-%, weiter bevorzugt von bis zu 2 Gew.-%, auf. Durch die Zugabe von Additiven können gewünschte Eigenschaften der Kunststoffzusammensetzung eingestellt werden, ohne dass die mechanischen Eigenschaften der Kunststoffzusammensetzung negativ beeinflusst werden. Bei einer bevorzugten Ausführungsform weist die Kunststoffzusammensetzung die folgende Zusammensetzung auf, wobei die Bestandteile der Kunststoffzusammensetzung so gewählt werden, dass sie in Summe 100 Gew.-% ergeben:

| | |
|---|---|
| Polyolefin: | 30 Gew.-% bis 96 Gew.-%, |
| Thermoplastisches Elastomer: | 4 Gew.-% bis 70 Gew.-%, |
| Verstärkungsfaser: | 10 Gew.-% bis 50 Gew.-%, |
| Additive: | 0 Gew.-% bis 3 Gew-%, |

bevorzugt:

| | |
|---|---|
| Polyolefin: | 40 Gew.-% bis 75 Gew.-%, |
| Thermoplastisches Elastomer: | 10 Gew.-% bis 60 Gew.-% |
| Verstärkungsfaser: | 15 Gew.-% bis 40 Gew.-%, |
| Additive: | 0 Gew.-% bis 2 Gew.-%. |

Bei einer bevorzugten Ausführungsform vorstehend beschriebener Zusammensetzung ist das Polyolefin ein PP, bevorzugt PPH. Bei einer weiteren bevorzugten Ausführungsform ist das Polyolefin ein PE, bevorzugt ein HDPE, LDPE, LLDPE, VLDPE oder MDPE.

Bei einer bevorzugten Ausführungsform vorstehend beschriebener Zusammensetzung ist das thermoplastische Elastomer ein Blockcopolymer wobei der Block A auf 1,3-Butadien basiert, wobei der Block A zumindest eine Block A zumindest zu 80 %, weiter bevorzugt zumindest zu 95 %, noch weiter bevorzugt zu 100 % hydriert ist und wobei der zumindest eine Block B ausgewählt ist aus einem Bereich von 15 Gew.-% bis 45 Gew.-%, bevorzugt von 20 Gew.-%

bis 40 Gew.-%, weiter bevorzugt von 30 Gew.-% bis 32 Gew.-%, noch weiter bevorzugt von 31 Gew.-%, jeweils bezogen auf das Gesamtgewicht des thermoplastischen Elastomers, und wobei das thermoplastische Elastomer eine Glasübergangstemperatur aus einem Bereich von 120 °C bis 230 °C, bevorzugt von 140 °C bis 215 °C, weiter bevorzugt von 160 °C bis 170 °C, aufweist.

Bei einer bevorzugten Ausführungsform vorstehend beschriebener Zusammensetzung sind die Verstärkungsfasern gläserne Flachfasern, insbesondere mit einem Formfaktor von Dicke zu Breite ausgewählt aus einen Bereich von 1:1,5 bis 1:5, bevorzugt von 1:2 bis 1:4, weiter bevorzugt von 1:2,5 bis 1:3,5.

Bei einer besonders bevorzugten Ausführungsform enthält die Kunststoffzusammensetzung das thermoplastische Elastomer in einer Menge ausgewählt aus dem Bereich von 1 Gew.-% bis 75 Gew.-%, bevorzugt von 4 Gew.-% bis 70 Gew.-%, weiter bevorzugt von 10 Gew.-% bis 60 Gew.-%, das Polyolefin in einer Menge ausgewählt aus dem Bereich von 25 Gew.-% bis 99 Gew.-%, bevorzugt von 35 Gew.-% bis 96 Gew.-%, von 40 Gew.-% bis 75 Gew.-%, und gläserne Flachfasern in einer Menge ausgewählt aus dem Bereich von 10 Gew.-% bis 70 Gew.-%, bevorzugt von 10 Gew.-% bis 50 Gew.-%, jeweils bezogen auf das Gesamtgewicht der Kunststoffzusammensetzung, wobei die Anteile der Zusammensetzung so gewählt sind, dass sie in Summe 100 Gew.-% der Kunststoffzusammensetzung ergeben, wobei das thermoplastische Elastomer ein Blockcopolymer ist, wobei der zumindest eine Block A auf 1,3-Butadien basiert, wobei der zumindest eine Block A zumindest zu 80 %, weiter bevorzugt zu 100 % hydriert ist und wobei der zumindest eine Block B ausgewählt ist aus einem Bereich von 15 Gew.-% bis 45 Gew.-%, bevorzugt von 20 Gew.-% bis 40 Gew.-%, weiter bevorzugt von 31 Gew.-%, jeweils bezogen auf das Gesamtgewicht des thermoplastischen Elastomers, und wobei das thermoplastische Elastomer eine Glasübergangstemperatur aus einem Bereich von 120 °C bis 230 °C, bevorzugt von 140 °C bis 215 °C, weiter bevorzugt von 160 °C bis 170 °C, aufweist und wobei das Polyolefin ein Polypropylen-Homopolymer ist.

Bei einer weiteren besonders bevorzugten Ausführungsform enthält die Kunststoffzusammensetzung das thermoplastische Elastomer in einer Menge ausgewählt aus dem Bereich von 1 Gew.-% bis 75 Gew.-%, bevorzugt von 4 Gew.-% bis 70 Gew.-%, weiter bevorzugt von 10 Gew.-% bis 60 Gew.-%, das Polyolefin in einer Menge ausgewählt aus dem Bereich von 25 Gew.-% bis 99 Gew.-%, bevorzugt von 35 Gew.-% bis 96 Gew.-%, von 40 Gew.-% bis 75 Gew.-%, jeweils bezogen auf das Gesamtgewicht der Kunststoffzusammensetzung, wobei die Anteile der Zusammensetzung so gewählt sind, dass sie in Summe 100 Gew.-% der Kunststoffzusammensetzung ergeben, wobei das thermoplastische Elastomer ein Blockcopolymer ist, wobei der zumindest eine Block A auf 1,3-Butadien basiert, wobei der zumindest eine Block A zumindest zu 80 %, weiter bevorzugt zu 100 % hydriert ist und wobei der zumindest eine Block B ausgewählt ist aus einem Bereich von 15 Gew.-% bis 45 Gew.-%, bevorzugt von 20 Gew.-% bis 40 Gew.-%, weiter bevorzugt von 31 Gew.-%, jeweils bezogen auf das Gesamtgewicht des thermoplastischen Elastomers, und wobei das thermoplastische Elastomer eine Glasübergangstemperatur aus einem Bereich von 120 °C bis 230 °C, bevorzugt von 140 °C bis 215 °C, weiter bevorzugt von 160 °C bis 170 °C, aufweist und wobei das Polyolefin ein Polypropylen-Homopolymer ist.

Die Kunststoffzusammensetzung wird vorzugsweise bereitgestellt, indem die jeweiligen Komponenten, insbesondere zumindest das Polyolefin und/oder das thermoplastische Elastomer, jeweils in einer Darreichungsform die ausgewählt ist aus der Gruppe, die aus Pulver, Gries, Pellet, Granulat, bevorzugt Zylindergranulat, Würfelgranulat, Zylindergranulat, Linsengranulat oder Splittergranulat und Filament besteht, bereitgestellt und vermengt werden. Das Vermengen des Polyolefins und des thermoplastischen Elastomers kann mittels Extruder, insbesondere Doppelschneckenextruder, Kneter, insbesondere Walzenkneter, statischen Mischer, dynamischen Mischer, Spritzgussmaschine, oder Kombinationen davon, erfolgen, wobei die Kunststoffzusammensetzung erhalten wird. Gemäß einer bevorzugten Ausführungsform erfolgt das Vermengen auf einer Spritzgussmaschine mit dynamischem Mischer oder mit statischem Mischer.

Weiter ist es möglich, dass nach dem Vermengen ein optionales Fertigungsverfahren, insbesondere ein Umformverfahren, Trennverfahren, Beschichtungsverfahren, durchgeführt wird. Hierdurch kann die Darreichungsform der Kunststoffzusammensetzung an die angedachte Verwendung angepasst und optimiert werden.

Bei einer bevorzugten Ausführungsform liegt die Kunststoffzusammensetzung in einer Darreichungsform vor, die aus der Gruppe, die aus Pulver, Gries, Krümel, Pellet, Granulat, und Filament, besteht, ausgewählt wird. Das Granulat kann als Zylindergranulat, Würfelgranulat, Zylindergranulat, Linsengranulat oder Splittergranulat vorliegen.

Durch die vorstehenden Darreichungsformen der Kunststoffzusammensetzung kann diese in einer Vielzahl von Fertigungsverfahren, insbesondere Spritzgussverfahren, Extrusionsverfahren, Granulationsverfahren, Druckverfahren, insbesondere Filamentdruckverfahren, Pulverdruckverfahren und/oder Granulatdruckverfahren, verwendet werden, wobei insbesondere die Kunststoffzusammensetzung bei Durchführung vorstehender Verfahren zu dem Formkörper geformt wird.

Ein Formkörper umfassend die Kunststoffzusammensetzung kann in einer Vielzahl von technisch anspruchsvollen Bereichen verwendet werden. Besonders bevorzugt wird der Formkörper in Powertools, Automobilien, Elektrotechnik, Luftfahrt, Raumfahrt, Schifffahrt, Kraftwerken, Industrieanlagen der chemischen Industrie, Medizin, Elektromobilität und/oder Kühlanlagen verwendet.

Es ist möglich, dass die Kunststoffzusammensetzung als Formkörper vorliegt. Vorzugsweise ist der Formkörper ein Spritzgusskörper, ein Extrudat oder ein gedruckter Formkörper.

Weiter ist es möglich, dass der Formkörper als Leitung, Rohr, Verbindungselement, Karosserieteil, Armaturenbrett, Bohrmaschinengehäuse, Gehäuse und Schächte für die Bauindustrie, Rotor, Lager, Gehäuse, Zahnrad oder Düse vorliegt.

Im Folgenden wird die Erfindung anhand von mehreren Ausführungsbeispielen unter Zuhilfenahme der beiliegenden Zeichnung beispielhaft erläutert. Die gezeigten Ausführungsbeispiele sind nur beispielhaft und daher nicht einschränkend zu verstehen.

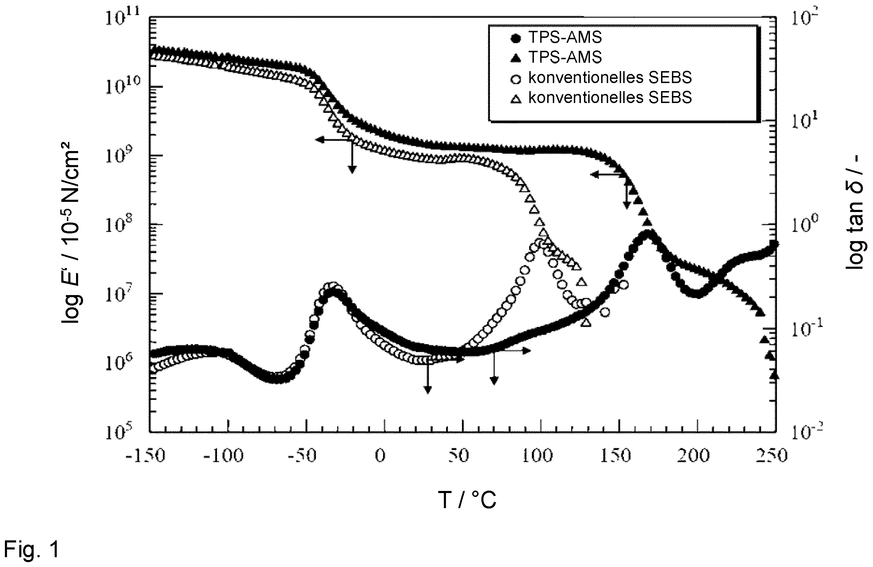

Fig. 1    zeigt ein Thermogramm zur Bestimmung der Glasübergangstemperatur.

Fig. 1 zeigt ein Thermogramm zur Bestimmung der Glasübergangstemperatur, deren Datensätze mittels dynamisch-mechanischer Analyse bei einer Frequenz von 11 Hz im Zugmodus erstellt wurden. Insbesondere erfolgte die Bestimmung der Glasübergangstemperatur mittels dynamisch mechanischer Analyse gemäß der in der ISO 6721-11:2019-06 beschriebenen Methode bestimmt. Aufgetragen auf der linken Y-Achse ist der dekadische Logarithmus des E-Moduls (log(E') in $10^{-5}N/cm^2$) in Abhängigkeit der Temperatur T in °C. Auf der rechten Y-Achse ist der dimensionslose Verlustwinkel (tan $\delta$) in Abhängigkeit der Temperatur T in °C aufgetragen, welcher die Dämpfungseigenschaften beschreibt. Die schwarzen Pfeile an den Messkurven weisen auf die zugehörigen Achsen hin.

Die ungefüllten Kreise und Dreiecke zeigen den Verlauf eines konventionellen Styrol-Ethylen-Butylen-Styrol (SEBS). Dieses thermoplastische Elastomer ist ein Copolymer und weist einen Block auf Styrolbasis und einen Block auf Basis von Ethylen und Butylen auf.

Die gefüllten Kreise und Dreiecke zeigen den Verlauf eines thermoplastischen Elastomers, wobei das thermoplastische Elastomer ein Copolymer war und zumindest einen Block A auf Dienbasis und einen Block B auf Basis von alpha-Methylstyrol (AMS) aufwies. Für das Dien von Block A war bei dem in Fig. 1 gezeigten thermoplastischen Elastomer zu 100 % hydriertes 1,3-Butadien, gewählt, wobei der Anteil des zumindest einen Blocks B 31 Gew.-% bezogen auf dem Gesamtgewicht lag. Dieses Polymer war somit ein thermoplastisches Elastomer der Untergruppe thermoplastische Styrol-Block-Copolymere (TPS) auf Basis von alpha-Methylstyrol und wird im Folgenden und in der Legende der Fig. 1 als TPS-AMS bezeichnet.

Das in Fig. 1 gezeigte thermoplastische Elastomer wies einen Wert für einen Schmelzflussindex bei 230 °C und einer Auflagelast von 2,16 kg ausgewählt aus einem Bereich von 5,6 g/10 min auf, insbesondere nach der in DIN EN ISO 1133-1:2012-03 beschriebenen Methode.

Aus dem Verlauf des Thermogramms konnten für beide Arten von thermoplastischen Elastomeren jeweils zwei stärkere Änderungen des logarithmisch aufgetragenen E-Moduls in Abhängigkeit der Temperatur ermittelt werden (siehe dreieckige Symbole). Des Weiteren waren auch jeweils zwei temperaturabhängige Änderungen in den Dämpfungseigenschaften (tan $\delta$) ersichtlich (siehe kreisförmige Symbole).

Aus den jeweiligen Maxima von tan $\delta$ konnten die Glasübergangstemperaturen der jeweiligen Blöcke der Polymere ermittelt werden. Beide thermoplastischen Elastomere wiesen jeweils einen Maxima bei etwa -30 °C auf, die dem Block zugeordnet werden kann, der auf Polyolefinen basierte. Weiter wiesen beide thermoplastische Elastomere bei höheren Temperaturen ein weiteres Maximum auf, was der Glasübergangstemperatur des Blocks zugeordnet werden konnte, der beim konventionellen SEBS auf Styrol bzw. bei dem thermoplastischen Elastomer der erfindungsgemäßen Kunststoffzusammensetzung auf alpha-Methylstyrol basierte.

Aus dem Kurvenverlauf von Fig. 1 konnte ermittelt werden, dass der Block auf Styrolbasis des konventionellen SEBS somit eine Glasübergangstemperatur von etwa 100 °C aufwies. Der Block des thermoplastischen Elastomers auf alpha-Methylstyrolbasis der erfindungsgemäßen Kunststoffzusammensetzung wies nach Fig. 1 eine Glasübergangstemperatur von 160 °C bis 170 °C auf.

In Tabelle 1 sind wesentliche Materialparameter von Polyolefinen gezeigt, die als konventionelle Kunststoffzusammensetzungen vorliegen und verwendet werden können. Weiter zeigt Tabelle 2 wesentliche Materialparameter einer glasfaserverstärkten Kunststoffzusammensetzung eines Polyolefins, welche 30 Gew.-% Verstärkungsfasern in Form von Glasfasern mit einem sphärischen Querschnitt bezogen auf das Gesamtgewicht der Kunststoffzusammensetzung aufweist. Die in Tabelle 1 und Tabelle 2 gezeigten Polyolefine sollen als Vergleichsbeispiele zu erfindungsgemäßen Kunststoffzusammensetzungen dienen. Die Abkürzung n. a. stellt nicht verfügbare Werte war.

Tabelle 1: Konventionelle Kunststoffzusammensetzungen auf Basis von Polypropylen-Homopolymer (PPH) als Polyolefin (PO) und deren Eigenschaften als Vergleichsmaterial und/oder Ausgangsmaterial für die erfindungsgemäße Kunststoffzusammensetzung.

| | PO1 | PO2 | PO3 | PO4 | PO5 |
|---|---|---|---|---|---|
| Typ des PO | PPH | PPH | PPH | PPH | PPH |

(fortgesetzt)

| | PO1 | PO2 | PO3 | PO4 | PO5 |
|---|---|---|---|---|---|
| Schmelzflussindex / g/10 min | 3,1 | 6,0 | 23 | 48 | 12 |
| Schwindung / % | 1,2/1,5 | 1/1,1 | 0,9/1 | 1/1 | 1/1,11 |
| Kerbschlagzähigkeit (Charpy) / kJ/m$^2$ | 4 | 3,5 | 3 | 3 | 3,3 |
| Schlagzähigkeit (Charpy) / kJ/m$^2$ | 145 | 140 | 91 | 87 | 115 |
| Wärmeformbeständigkeit (HDT-B) / °C | 115 | 55 | 105 | 105 | 110 |

Tabelle 2: Konventionelle Kunststoffzusammensetzung umfassend Verstärkungsfasern (Rundfasern) auf Basis von Polypropylen-Homopolymer (PPH) als Polyolefin (PO) und deren Eigenschaften als Vergleichsmaterial und/oder Ausgangsmaterial für die erfindungsgemäße Kunststoffzusammensetzung.

| | POG1 |
|---|---|
| Typ des PO | PPH |
| Anteil an Verstärkungsfasern / Gew.-% | 30 |
| Schwindung / % | 0,2/0,8 |
| Verzug / mm | 16,45 |
| Kerbschlagzähigkeit (Izod) / kJ/m$^2$ | 10,4 |
| Kerbschlagzähigkeit (Charpy) / kJ/m$^2$ | 10 |
| Schlagzähigkeit (Charpy) / kJ/m$^2$ | 48,4 |
| Wärmeformbeständigkeit (HDT-B) / °C | 159 |

Tabelle 3 und Tabelle 4 zeigen wesentliche Materialparameter von Kunststoffzusammensetzungen A1 bis A4 und B1 bis B7, die zumindest ein Polyolefin und zumindest ein thermoplastisches Elastomer nach Anspruch 1 aufwiesen. Bei den Kunststoffzusammensetzungen A1 bis A4 und B1 bis B5 war das Polyolefin ein Polypropylen-Homopolymer (PPH). Bei den Kunststoffzusammensetzungen B6 und B7 war das Polyolefin eine Mischung aus Polypropylen-Homopolymer (PPH) mit einem Anteil von 85 Gew.-% und Linear-Low-Density-Polyethylen (LLDPE) mit einem Anteil von 15 Gew.-%. Das thermoplastische Elastomer war ein thermoplastisches Styrol-Block-Copolymer und enthielt zumindest einen Block A auf Dienbasis und zumindest einen Block B auf alpha-Methylstyrolbasis. In diesem konkreten Fall umfasste die Kunststoffzusammensetzung das TPS-AMS welches in Thermogram von Fig. 1 analysiert wurde. Die Kunststoffzusammensetzungen A1 bis A4 nach Tabelle 3 wiesen das thermoplastische Elastomer mit einem Anteil von zwischen 25 Gew.-% und 60 Gew.-% jeweils bezogen auf das Gesamtgewicht der Kunststoffzusammensetzung auf.

Die Kunststoffzusammensetzungen B1 bis B7 nach Tabelle 4 wiesen das thermoplastische Elastomer mit einem Anteil von zwischen 5 Gew.-% und 25 Gew.-% jeweils bezogen auf das Gesamtgewicht der Kunststoffzusammensetzung auf. Zusätzlich wiesen die Kunststoffzusammensetzungen B1 bis B7 Verstärkungsfasern in Form von gläserne Flachfasern auf, wobei der Anteil der Verstärkungsfasern bezogen auf das Gesamtgewicht der Kunststoffzusammensetzung zwischen 15 Gew.-% und 20 Gew.-% variierte.

Der Schmelzflussindizes der in den Tabellen 1 bis 4 beschrieben Kunststoffzusammensetzungen wurden bei 230 °C und einer Auflagelast von 2,16 kg insbesondere nach der in DIN EN ISO 1133-1:2012-03 beschriebenen Methode bestimmt.

Kunststoffzusammensetzungen mit einem Schmelzflussindexes von größer 3 g/10 min eigneten sich aufgrund ihrer niedrigeren Viskosität besonders gut für Extrusionsverfahren und/oder Spritzgussverfahren. Kunststoffzusammensetzungen die in Spritzgussverfahren und Extrusionsverfahren eingesetzt sind, sind Spannungen ausgesetzt, die zu einer erhöhten Orientierung der Polymerketten führen. Durch die Orientierung der Polymerketten wiederum ist mit einer erhöhten Schwindung zu erwarten. Solche Kunststoffzusammensetzungen wiesen hierdurch typischerweise eine Schwindung in Längsrichtung und Querrichtung von jeweils von bis zu 2 % auf, was sich in einer verringerten Maßhaltigkeit der Formkörper niederschlug. Kunststoffzusammensetzungen mit einem Schmelzflussindexes von größer 3 g/10 min eigneten sich zusätzlich auch sehr gut für Druckverfahren, wie Filamentdruckverfahren.

Die Schwindungen in Längsrichtung und die Schwindungen in Querrichtung wurden durch die in DIN ISO 294-4 beschriebene Methode bestimmt, wobei die Ausgangsmaße einer spritzgegossenen Platte die folgenden waren: Breite: 61 mm, Länge 61 mm, Höhe: 2 mm.

Der Verzug der jeweiligen Kunststoffzusammensetzung wurde an einer Platte mit den Ausgangsmaßen von Breite: 150 mm, Länge 100 mm, Höhe: 2 mm wie oben bereits erläutert bestimmt.

Die Kerbschlagzähigkeiten und Schlagzähigkeiten nach Charpy der Kunststoffzusammensetzungen nach den Tabellen 1 bis 4 wurden bei 23 °C durch die jeweilige in DIN EN ISO 179-1:2010-11 beschriebene Methode bestimmt.

Die Kerbschlagzähigkeiten nach Izod wurden bei 23 °C durch die in DIN EN ISO 180:2020-03 beschriebene Methode bestimmt.

Die Abkürzung "NB" wurde bei der Bestimmung der Schlagzähigkeit und der Kerbschlagzähigkeit für Probenkörper gewählt, die auch nach der Schlagprüfung nicht in zwei Teile zerbrachen, sich verbogen und/oder trotz Kerbe nach dem Schlag elastisch zurückfederten. In einer bevorzugten Ausführungsform wurden Probenkörper, die während der Bestimmung der Kerbschlagzähigkeiten und Schlagzähigkeiten bei einer Belastung von weniger als 80 kJ/m$^2$ nicht brachen als "NB" gewertet.

Die Wärmeformbeständigkeit (engl. heat deflection temperature, HDT) nach der Methode B wurde gemäß der DIN EN ISO 75-1:2020-06 und der DIN EN ISO 75-2:2013-08 bestimmt und wird als HDT-B abgekürzt. Bei Methode B durch Gewichtstücke und/oder Federn eine Kraft pro Fläche von 0,45 N/mm$^2$ auf den Probenkörper aufgebracht.

Die Kunststoffzusammensetzungen A1 bis A4 und B1 bis B7 wurden bereitgestellt, indem die jeweiligen Komponenten, insbesondere zumindest das Polyolefin und/oder das thermoplastische Elastomer, jeweils als Granulat, Pulver, Flocken oder Krümel bereitgestellt und vermengt wurden.

Das Vermengen des Polyolefins und des thermoplastischen Elastomers erfolgte mittels Doppelschneckenextruder und Walzenkneter, wobei die Kunststoffzusammensetzungen A1 bis A4 und B1 bis B7 erhalten wurde.

Die erhaltenen Kunststoffzusammensetzungen A1 bis A4 und B1 bis B7 lagen als Granulat vor.

Anschließend wurden Formkörper in Form von Prüfkörpern aus der Kunststoffzusammensetzung geformt, um die in den Tabellen 3 und 4 angegebenen Parameter zu ermitteln.

Tabelle 3: Kunststoffzusammensetzungen, die zumindest Polypropylen-Homopolymer (PPH) als Polyolefin (PO) und TPS-AMS enthielten (n. a.: nicht verfügbar).

| | A1 | A2 | A3 | A4 |
|---|---|---|---|---|
| Typ des PO | PPH | PPH | PPH | PPH |
| Anteil des TPS-AMS / Gew.-% | 60 | 40 | 30 | 25 |
| Schmelzflussindex / g/ 10 min | 12 | 12 | 3,1 | 3,1 |
| Schwindung / % | 0,4/0,5 | 0,7/0,7 | 0,5/0,6 | 0,6/0,9 |
| Kerbschlagzähigkeit (Izod) / kJ/m$^2$ | 55 | 60 | 63 | 60 |
| Kerbschlagzähigkeit (Charpy) / kJ/m$^2$ | n. a. | 81 | NB | 70 |
| Schlagzähigkeit (Charpy) / kJ/m$^2$ | NB | NB | NB | NB |
| Wärmeformbeständigkeit (HDT-B) / °C | 61 | 66 | 73 | n. a. |
| Verwendung | Spritzguss | Spritzguss | Filamentdruck, Granulatdruck, Extrusion | Filamentdruck, Granulatdruck, Extrusion |

Tabelle 4: Erfindungsgemäße Kunststoffzusammensetzungen, die Polypropylen-Homopolymer (PPH) und/oder Linear-Low-Density-Polyethylen als Polyolefin (PO) und TPS-AMS enthalten, wobei die Kunststoffzusammensetzungen zusätzlich Verstärkungsfasern (Flachfasern) enthielten (n. a.: nicht verfügbar).

| | B1 | B2 | B3 | B4 | B5 | B6 | B7 |
|---|---|---|---|---|---|---|---|
| Typ des PO | PPH | PPH | PPH | PPH | PPH | PPH/ LLDPE | PPH/ LLDPE |
| Anteil des TPS-AMS/ Gew.-% | 5 | 10 | 15 | 15 | 20 | 15 | 20 |
| Anteil an Verstärkungsfase rn / Gew.-% | 50 | 50 | 50 | 30 | 50 | 25 | 15 |
| Schwindung / % | 0,1/0,4 | 0,1/0,3 | 0/0,05 | 0/0,3 | 0,1/0,3 | 0,2/0,4 | 0,2/0,4 |
| Verzug / mm | 0,25 | 0,18 | 0,03 | n. a. | n. a. | 3,08 | 3,5 |
| Kerbschlagzähig keit (Izod) / kJ/m$^2$ | 18 | 23 | 26 | 26 | 28 | 36 | 34 |
| Kerbschlagzähig keit (Charpy) / kJ/m$^2$ | 19 | 22 | 25 | 26 | 28 | 39 | 33 |
| Schlagzähigkeit (Charpy) / kJ/m$^2$ | 73 | 80 | 75 | 73 | 70 | 88 | 76 |
| Wärmeformbestä ndigkeit (HDT-B) / °C | 162 | 161 | 158 | 158 | 158 | 141 | 134 |
| Verwendung | Spritzguss | Spritzguss | Spritzguss | Spritzguss | Spritzguss | Extrusion | Extrusion |

Aus den in den Tabellen 3 und 4 aufgetragenen Parametern ist ersichtlich, dass die erfindungsgemäßen Kunststoffzusammensetzungen sehr geringe Schwindungen aufwiesen. Die gemessenen Schwindungen der Kunststoffzusammensetzungen A1 bis A4 betrugen lediglich 0,4 % bis 0,7 % in Längsrichtung und 0,5 % bis 0,9 % in Querrichtung.

Somit waren die gemessenen Schwindungen geringer als die weiter oben für teilkristalline Thermoplasten zu erwartenden typischen Schwindungen. Vielmehr lagen sie in dem Bereich, der typisch für die Schwindung von amorphen Thermoplasten angesehen wird.

Durch die Zugabe der Verstärkungsfasern konnte die Schwindung der Kunststoffzusammensetzung noch weiter reduziert werden. Dies wird ersichtlich aus den Schwindungen die für die Kunststoffzusammensetzungen B1 bis B7 ermittelt wurden. So wiesen die Kunststoffzusammensetzungen B6 und B7, welche als Polyolefin Mischungen aus PPH und LLDPE enthielten, mit 0,2 % in Längsrichtung und 0,4 % in Querrichtung die höchsten Werte der Kunststoffzusammensetzungen nach Tabelle 4 auf, wobei der Anteil thermoplastischen Elastomers 15 Gew.-% oder 20 Gew.-% und der Anteil an gläsernen Flachfasern 25 Gew.-% bzw. 15 Gew.-%, jeweils bezogen auf das Gesamtgewicht der Kunststoffzusammensetzung, betrug. Anzumerken ist jedoch, dass die Kunststoffzusammensetzungen B6 und B7 die höchsten Werte für die Kerbschlagzähigkeit innerhalb der Gruppe von Kunststoffzusammensetzungen B1 bis B7 aufwiesen. Insbesondere hervorzuheben sind die Kunststoffzusammensetzungen B3 und B4, bei denen keine Schwindung in Längsrichtung mehr messbar war. Diese Kunststoffzusammensetzungen wiesen jeweils einen Anteil von 15 Gew.-% thermoplastisches Elastomer und 50 Gew.-% oder 30 Gew.-% gläserne Flachfasern auf, jeweils bezogen auf das Gesamtgewicht der Kunststoffzusammensetzung. In Querrichtung betrug die Schwindung lediglich 0,05 % bzw. 0,3 %.

Im Folgenden werden die erfindungsgemäßen Kunststoffzusammensetzungen der Tabellen 3 und 4 mit den konventionellen Kunststoffzusammensetzungen verglichen.

Hierbei basierten die Kunststoffzusammensetzungen A1 und A2 der Tabelle 3 auf dem Polyolefin der Kunststoffzusammensetzung PO5 der Tabelle 1, wobei die Kunststoffzusammensetzungen A1 und A2 zusätzlich noch das thermoplastische Elastomer nach Fig. 1 aufwiesen. Die Kunststoffzusammensetzungen A3 und A4 der Tabelle 3 basierten auf dem Polyolefin der Kunststoffzusammensetzung PO1 der Tabelle 1, wobei die Kunststoffzusammensetzungen A3 und A4 zusätzlich noch das thermoplastische Elastomer nach Fig. 1 aufwiesen.

Die Kunststoffzusammensetzungen A1, A2, A3 und A4 wiesen alle verringerte Schwindungen in Längsrichtung sowie in Querrichtung auf im Vergleich zu den Kunststoffzusammensetzungen PO1 und PO5, die lediglich aus einem Polyolefin bestanden. Nach den Gleichungen (2) und (3) konnte in Längsrichtung die Schwindung um mindestens 30 % bis zu 60 % reduziert werden, während in Querrichtung die Schwindung mindestens um 36 % bis zu 55 % reduziert werden konnte.

Mit anderen Worten wiesen die erfindungsgemäßen Kunststoffzusammensetzungen umfassend ein Polyolefin und das thermoplastische Elastomer, wobei das thermoplastische Elastomer ein thermoplastisches Styrol-Block-Copolymer war, dass zumindest einen Block A auf Dienbasis und zumindest einen Block B auf alpha-Methylstyrolbasis aufwies, eine verringerte Schwindung auf im Vergleich zu Kunststoffzusammensetzungen, die lediglich das Polyolefin enthielten.

Tabelle 5: Vergleich einer konventionellen Kunststoffzusammensetzung mit erfindungsgemäßen Kunststoffzusammensetzungen in Bezug auf Schwindung in Längsrichtung und in Querrichtung, berechnet nach den Gleichungen (2) und (3).

|  | A1/PO5 | A2/PO5 | A3/PO1 | A4/PO1 |
|---|---|---|---|---|
| Verhältnis Schwindung (Längsrichtung) | 60% | 30% | 58% | 50% |
| Verhältnis Schwindung (Querrichtung) | 55% | 36% | 50% | 47% |

In Tabelle 6 sind zum Vergleich die Schwindungen von Kunststoffzusammensetzungen mit gläsernen Verstärkungsfasern. Hierzu wurden die erfindungsgemäßen Kunststoffzusammensetzungen B3, B4 und B5 der Tabelle 4 und die Kunststoffzusammensetzung PPG1 der Tabelle 2 herangezogen, wobei die Kunststoffzusammensetzungen B3, B4 und B5 zusätzlich noch das thermoplastische Elastomer nach Fig. 1 aufweisen.

Die Kunststoffzusammensetzungen B3, B4 und B5 weisen alle verringerte Schwindungen in Längsrichtung sowie in Querrichtung auf im Vergleich zu der Kunststoffzusammensetzung PPG1, die lediglich aus einem glasfaserverstärkten Polyolefin besteht.

Tabelle 6: Vergleich der Verringerung der Schwindung in Längsrichtung und in Querrichtung einer konventionellen glasfaserverstärkten Kunststoffzusammensetzung mit erfindungsgemäßen Kunststoffzusammensetzungen, wobei diese Verstärkungsfasern aufweisen. Werte berechnet nach den Gleichungen (2) und (3).

|  | B3/PPG1 | B4/PPG1 | B5/PPG1 |
|---|---|---|---|
| Verhältnis Schwindung (Längsrichtung) | 100 % | 100 % | 50 % |
| Verhältnis (Querrichtung) | 94 % | 63 % | 63 % |

Beim Vergleich des Verzugs der Kunststoffzusammensetzung B3 und PPG1 wird zusätzlich ersichtlich, dass neben der Schwindung auch der Verzug der Kunststoffzusammensetzung B3 von 0,03 mm im Vergleich zu dem Verzug der Kunststoffzusammensetzung PPG1 von 16,45 mm um mehr als eine Größenordnung geringer war bzw. nahezu kein Verzug auftrat. Dies war überraschend, da bei der Kunststoffzusammensetzung PPG1 durch die enthaltenen Verstärkungsfasern im Vergleich zu einer unverstärkten Kunststoffzusammensetzung ein geringer Verzug erwartet wurde.

Des Weiteren unterschieden sich die Wärmeformbeständigkeit HDT-B der Kunststoffzusammensetzungen B3, B4 und B5 mit einem Wert von 158 °C lediglich um 1 °C von der Wärmeformbeständigkeit HDT-B des PPG1. Dieser hohe Wert bzw. der geringe Unterschied war überraschend, da die Kunststoffzusammensetzungen das thermoplastische Elastomer mit Anteilen von 15 Gew.-% oder 20 Gew.-% bezogen auf das Gesamtgewicht der Kunststoffzusammensetzung aufwiesen und bei einer Zugabe eines konventionellen Elastomers mit einer Reduzierung der Wärmeformbeständigkeit zu rechnen wäre. Vielmehr zeigte es, dass die Wärmeformbeständigkeit HDT-B nahezu unabhängig war von der Zugabe des thermoplastischen Elastomers.

Auch wird aus den in den Tabellen 3 und 4 dargestellten Parametern deutlich, dass Bauteile aus den erfindungsgemäßen Zusammensetzungen sehr gute Eigenschaften aufwiesen. So waren sie sehr schlagzäh und kerbschlagzäh, insbesondere im Vergleich zu konventionellen Kunststoffzusammensetzungen.

Zusammenfassend wurde es, wie vorstehend dargestellt, durch die erfindungsgemäße Kunststoffzusammensetzung ermöglicht, Formkörper bereitzustellen, die eine hohe Maßhaltigkeit durch eine sehr geringe Schwindung, sowohl in Längsrichtung, wie auch in Querrichtung, sowie einen geringen Verzug aufwiesen, insbesondere im Vergleich zu konventionellen Kunststoffzusammensetzungen. Dies war wohl auf die hohe Glasübergangstemperatur des thermoplastischen Elastomers nach Anspruch 1 zurückzuführen, wodurch nach dem Einspritzen geschmolzener Kunststoffzusammensetzung sehr rasch eine Kristallisation und Erstarrung einsetzte. Weiter wiesen die den Kunststoffzusammensetzung erhaltenen Formkörper, neben der geringen Schwindung, verbesserte mechanische Eigenschaften wie eine hohe Schlagzähigkeit und eine hohe Kerbschlagzähigkeit auf, welche auf die Zugabe des thermoplastischen Elastomers zurückzuführen war. Somit war es möglich eine Kunststoffzusammensetzung zu erhalten, die die vorteilhaften Eigenschaften von teilkristallinen Thermoplasten aufwies, sowie die einfache Verarbeitbarkeit und geringe Schwindung welche typisch ist für amorphen Thermoplasten.

Selbstverständlich können die aufgeführten Ausführungsvarianten beliebig miteinander kombiniert werden und stellen keine Limitierung dar.

**Patentansprüche**

1. Kunststoffzusammensetzung, die zumindest ein Polyolefin und zumindest ein thermoplastisches Elastomer enthält,

   wobei das zumindest eine thermoplastische Elastomer ein Copolymer ist, dass zumindest einen Block A auf Dienbasis und zumindest einen Block B auf alpha-Methylstyrolbasis aufweist,
   wobei das Verhältnis der Differenz zwischen der Schwindung des Polyolefins und der Schwindung der Kunststoffzusammensetzung zur Schwindung des Polyolefins mindestens einen Wert von 30 %, beträgt, wobei die Schwindungen gemäß DIN ISO 294-4 bestimmt sind,
   wobei die Kunststoffzusammensetzung Verstärkungsfasern in einer Menge von 10 Gew.-% bis 70 Gew.-%, jeweils bezogen auf das Gesamtgewicht der Kunststoffzusammensetzung, enthält, wobei die Verstärkungsfasern als Flachfasern ausgestaltete Glasfasern umfassen.

2. Kunststoffzusammensetzung nach Anspruch 1,
   **dadurch gekennzeichnet,**
   **dass** die Verstärkungsfasern Glasfasern sind.

3. Kunststoffzusammensetzung nach Anspruch 1 oder 2,

**dadurch gekennzeichnet,**
**dass** die Glasfasern Flachfasern sind, die vorzugsweise einen Formfaktor von Dicke zu Breite aus einem Bereich von 1:1,5 bis 1:5 aufweisen.

4. Kunststoffzusammensetzung nach einem der vorangegangenen Ansprüche,
**dadurch gekennzeichnet,**
**dass** das Polyolefin aus der Gruppe, die aus Polypropylen (PP), insbesondere Polypropylen-Homopolymer (PPH), Polypropylen-Copolymer (PPC), oder Polypropylen-Random-Copolymer (PPR), Polyethylen (PE), insbesondere High-Density-Polyethylen (HDPE), Low-Density-Polyethylen (LDPE), Linear-Low-Density-Polyethylen (LLDPE), Very-Low-Density-Polyethylen (VLDPE), oder Medium-Density-Polyethylen (MDPE), Ethylen-Vinylacetat-Copolymer (EVA), Ethylen-Ethylacrylat-Copolymer (EEA), Ethylen-Butylacrylat-Copolymer (EBA) und deren Copolymeren und Mischungen davon besteht, ausgewählt ist.

5. Kunststoffzusammensetzung nach einem der vorangegangenen Ansprüche,
**dadurch gekennzeichnet,**
**dass** das thermoplastische Elastomer eine Glasübergangstemperatur aus einem Bereich von 120 °C bis 230 °C aufweist.

6. Kunststoffzusammensetzung nach einem der vorangegangenen Ansprüche,
**dadurch gekennzeichnet,**
**dass** der Block A auf Dienbasis wenigstens teilweise hydriert ist.

7. Kunststoffzusammensetzung nach einem der vorangegangenen Ansprüche,
**dadurch gekennzeichnet,**
**dass** der Block A aus der Gruppe, die aus Butadien, Isopren und Kombinationen davon besteht, ausgewählt ist.

8. Kunststoffzusammensetzung nach einem der vorangegangenen Ansprüche,
**dadurch gekennzeichnet,**
**dass** der Anteil des Blocks B in dem thermoplastischen Elastomer in einem Bereich von 15 Gew.-% bis 45 Gew.-%, jeweils bezogen auf das Gesamtgewicht des thermoplastischen Polymers, liegt.

9. Kunststoffzusammensetzung nach einem der vorangegangenen Ansprüche,
**dadurch gekennzeichnet,**
**dass** die Kunststoffzusammensetzung das thermoplastische Elastomer in einer Menge von bis zu 75 Gew.-%, bezogen auf das Gesamtgewicht der Kunststoffzusammensetzung, enthält.

10. Kunststoffzusammensetzung nach einem der vorangegangenen Ansprüche,
**dadurch gekennzeichnet,**
**dass** die Kunststoffzusammensetzung in einer Darreichungsform vorliegt, die aus der Gruppe, die aus Pulver, Gries, Krümel, Granulat, und Filament, besteht, ausgewählt wird.

11. Kunststoffzusammensetzung nach einem der vorangegangenen Ansprüche,
**dadurch gekennzeichnet,**
**dass** die Kunststoffzusammensetzung als Formkörper vorliegt.

12. Kunststoffzusammensetzung nach einem der vorangegangenen Ansprüche,
**dadurch gekennzeichnet,**
**dass** der Formkörper ein Spritzgussformkörper, ein Extrudat oder ein gedruckter Formkörper ist.

13. Verwendung der Kunststoffzusammensetzung nach einem der Ansprüche 1 bis 10 beim Spritzgießen, Extrudieren oder beim additiven Fertigen.

14. Verfahren zur Herstellung eines Formkörpers, wobei das Verfahren die zumindest die folgenden Schritte umfasst:

    - Bereitstellen einer Kunststoffzusammensetzung nach einem der Ansprüche 1 bis 10,
    - Formen der bereitgestellten Kunststoffzusammensetzung zu einem Formkörper.

**Claims**

1. Polymer composition containing at least one polyolefin and at least one thermoplastic elastomer,

   wherein the at least one thermoplastic elastomer is a copolymer having at least one diene-based block A and at least one alpha-methylstyrene-based block B,
   wherein the ratio of the difference between the shrinkage of the polyolefin and the shrinkage of the polymer composition to the shrinkage of the polyolefin has at least a value of 30%, where the shrinkages are determined to DIN ISO 294-4,
   wherein the polymer composition contains reinforcing fibres in an amount of 10% by weight to 70% by weight, based in each case on the total weight of the polymer composition, where the reinforcing fibres comprise glass fibres configured as flat fibres.

2. Polymer composition according to Claim 1,
   **characterized in that**
   the reinforcing fibres are glass fibres.

3. Polymer composition according to Claim 1 or 2, **characterized in that**
   the glass fibres are flat fibres that preferably have a form factor of thickness to width from a range from 1:1.5 to 1:5.

4. Polymer composition according to any of the preceding claims,
   **characterized in that**
   the polyolefin is selected from the group consisting of polypropylene (PP), especially polypropylene homopolymer (PPH), polypropylene copolymer (PPC), or polypropylene random copolymer (PPR), polyethylene (PE), in particular high-density polyethylene (HDPE), low-density polyethylene (LDPE), linear low-density polyethylene (LLDPE), very low-density polyethylene (VLDPE), or medium-density polyethylene (MDPE), ethylene-vinyl acetate copolymer (EVA), ethylene-ethyl acrylate copolymer (EEA), ethylene-butyl acrylate copolymer (EBA) and copolymers and mixtures thereof.

5. Polymer composition according to any of the preceding claims,
   **characterized in that**
   the thermoplastic elastomer has a glass transition temperature from a range from 120°C to 230°C.

6. Polymer composition according to any of the preceding claims,
   **characterized in that**
   the diene-based block A has been at least partly hydrogenated.

7. Polymer composition according to any of the preceding claims,
   **characterized in that**
   the block A is selected from the group consisting of butadiene, isoprene and combinations thereof.

8. Polymer composition according to any of the preceding claims,
   **characterized in that**
   the proportion of the block B in the thermoplastic elastomer is within a range from 150 by weight to 45% by weight, based in each case on the total weight of the thermoplastic polymer.

9. Polymer composition according to any of the preceding claims,
   **characterized in that**
   the polymer composition contains the thermoplastic elastomer in an amount of up to 75% by weight, based on the total weight of the polymer composition.

10. Polymer composition according to any of the preceding claims,
    **characterized in that**
    the polymer composition is in a presentation form selected from the group consisting of powder, grit, crumbs, pellets and filaments.

11. Polymer composition according to any of the preceding claims,
    **characterized in that**

the polymer composition takes the form of a shaped body.

12. Polymer composition according to any of the preceding claims,
**characterized in that**
the shaped body is an injection moulding, an extrudate or a printed shaped body.

13. Use of the polymer composition according to any of Claims 1 to 10 in injection moulding, extrusion or additive manufacturing.

14. Process for producing a shaped body, wherein the process comprises at least the following steps:

- providing a polymer composition according to any of Claims 1 to 10,
- forming the polymer composition provided to a shaped body.

**Revendications**

1. Composition de matière plastique qui contient au moins une polyoléfine et au moins un élastomère thermoplastique,

dans laquelle l'au moins un élastomère thermoplastique est un copolymère qui comprend au moins un bloc A à base de diène et au moins un bloc B à base d'alpha-méthylstyrène,
dans laquelle le rapport de la différence entre le retrait de la polyoléfine et le retrait de la composition de matière plastique et le retrait de la polyoléfine représente au moins une valeur de 30 %,
dans laquelle les retraits sont déterminés selon DIN ISO 294-4,
dans laquelle la composition de matière plastique contient des fibres de renforcement dans une quantité de 10 % en poids à 70 % en poids, par rapport au poids total de la composition de matière plastique, dans laquelle les fibres de renforcement comprennent des fibres de verre sous la forme de fibres plates.

2. Composition de matière plastique selon la revendication 1,
**caractérisée en ce que**
les fibres de renforcement sont des fibres de verre.

3. Composition de matière plastique selon la revendication 1 ou 2, **caractérisée en ce que**
les fibres de verre sont des fibres plates qui présentent de préférence un facteur de forme entre épaisseur et largeur de l'ordre de 1:1,5 à 1:5.

4. Composition de matière plastique selon l'une des revendications précédentes,
**caractérisée en ce que**
la polyoléfine est sélectionnée dans le groupe constitué de : polypropylène (PP°, plus particulièrement homopolymère de polypropylène (PPH), copolymère de polypropylène (PPC) ou copolymère aléatoire de polypropylène (PPR), polyéthylène (PE), plus particulièrement polyéthylène haute densité (HDPE), polyéthylène basse densité (LDPE), polyéthylène basse densité linéiare (LLDPE), polyéthylène très basse densité (VLDPE) ou polyéthylène de moyenne densité (MDPE), copolymère éthylène-acétate de vinyle (EVA), copolymère éthylène-acrylate d'éthyle (EEA), copolymère éthylène-acrylate de butyle (EBA) et leurs copolymères et mélanges.

5. Composition de matière plastique selon l'une des revendications précédentes,
**caractérisée en ce que**
l'élastomère thermoplastique présente une température de transition vitreuse de l'ordre de 120 °C à 230 °C.

6. Composition de matière plastique selon l'une des revendications précédentes,
**caractérisée en ce que**
le bloc A à base de diène est au moins partiellement hydrogéné.

7. Composition de matière plastique selon l'une des revendications précédentes,
**caractérisée en ce que**
le bloc A est sélectionné dans le groupe constitué due : butadiène, isoprène et des combinaisons de ceux-ci.

8. Composition de matière plastique selon l'une des revendications précédentes,

**caractérisée en ce que**
la part du bloc B dans l'élastomère thermoplastique se trouve dans une plage de 15 % en poids à 45 % en poids, par rapport au poids total du polymère thermoplastique.

9. Composition de matière plastique selon l'une des revendications précédentes,
**caractérisée en ce que**
la composition de matière plastique contient l'élastomère thermoplastique dans une quantité jusqu'à 75 % en poids, par rapport au poids total de la composition de matière plastique.

10. Composition de matière plastique selon l'une des revendications précédentes,
**caractérisée en ce que**
la composition de matière plastique est présente sous une forme d'administration qui est sélectionnée dans le groupe constitué de : poudre, semoule, miettes, granulés et filaments.

11. Composition de matière plastique selon l'une des revendications précédentes,
**caractérisée en ce que**
la composition de matière plastique existe sous la forme d'un corps moulé.

12. Composition de matière plastique selon l'une des revendications précédentes,
**caractérisée en ce que**
le corps moulé est corps moulé par injection, un extrudat ou un corps moulé par pression.

13. Utilisation de la composition de matière plastique selon l'une des revendications 1 à 10 pour le moulage par injection, l'extrusion ou la fabrication additive.

14. Procédé de fabrication d'un corps moulé, dans lequel le procédé comprend au moins les étapes suivantes :

   - mise à disposition d'une composition de matière plastique selon l'une des revendications 1 à 10,
   - formage de la composition de matière plastique mise à disposition afin d'obtenir un corps moulé.

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3212713 B2
- US 7893171 B2

- WO 2020058313 A1